# DEMANDE DE BREVET EUROPEEN

(11) **EP 1 995 043 A1**
(43) Date de publication de la demande: **26.11.2008**
(21) Numéro de dépôt: 08156472.6
(22) Date de dépôt: 19.05.2008
(51) Int. Cl.: B29C 70/22, B29C 70/48, B29C 53/08, B29B 11/16, B29C 70/24, B29C 70/20

(54) **Procédé de réalisation de préforme axisymétrique**

(30) Priorité: 22.05.2007 FR 0703630
(71) Demandeur: Protac, 45240 La Ferté Saint Aubin (FR)
(72) Inventeur: Zanelli, Didier, 45100 Orleans (FR); Roziere, Jean-Marie, 75013 Paris (FR)
(74) Mandataire: Esselin, Sophie

(57) **Abrégé**

La présente invention concerne un procédé de réalisation d'une préforme axisymétrique à partir d'une gaine d'épaisseur fine, non imprégnée, et pouvant être tressée ou non. Une gaine déformable (1) est mise en forme par l'intermédiaire de replies de la gaine sur elle-même et comporte au moins une couture reliant entre eux les replis de façon à les maintenir en forme. Cette préforme axisymétrique peut être utilisée, une fois la pièce composite finie, dans un propulseur à poudre, hybride ou liquide, en temps que protection thermique.

L'invention présente en outre comme avantage que les opérations à mettre en oeuvre sont simples et en nombre restreint.

## Description

La présente invention concerne un procédé de réalisation d'une préforme axisymétrique à partir d'une gaine d'épaisseur fine, non imprégnée, et pouvant être tressée ou non. Cette préforme axisymétrique peut être utilisée, une fois la pièce composite finie, dans un propulseur à poudre, hybride ou liquide, en temps que protection thermique.

Actuellement, le procédé couramment utilisé pour la réalisation de pièces axisymétriques consiste à découper dans des rouleaux de tissus fibrés pré-imprégnés de résine des bandes en biais, avec un angle d'environ 45°. Ces bandes sont ensuite cousues entre elles, puis enroulées en cône autour d'un mandrin axisymétrique avant d'être cuites et stabilisées.

Ce procédé présente deux inconvénients principaux. Tout d'abord, l'utilisation de tissus pré-imprégnés rend les matières premières périssables. Ensuite, le nombre d'opérations de fabrication à réaliser est élevé.

Pour pallier ces inconvénients, le procédé selon l'invention repose sur l'utilisation de gaines déformables pouvant être non imprégnées, et mises en forme judicieusement.

A cet effet, l'invention est un procédé de réalisation de préforme axisymétrique destinée à la réalisation de protections thermiques ablatives, dans lequel une gaine déformable est mise en forme par l'intermédiaire de replis de la gaine sur elle-même, caractérisé en ce qu'il comporte la réalisation d'au moins une couture reliant entre eux les replis de façon à les maintenir en forme.

Avantageusement, les replis de la gaine sur elle-même font avec ladite gaine un angle fixe compris entre 15° et 75°, obtenu par une superposition de replis approximativement équidistants.

Avantageusement, les replis de la gaine sur elle-même font avec ladite gaine un angle variable compris entre 15° et 75°, obtenu par une superposition de replis non équidistants.

Avantageusement, ladite gaine est tressée.

Avantageusement, ladite gaine est non tressée.

Avantageusement, la gaine est réalisée à partir de : verre, verre lavé, basalte, silice, carbone.

Avantageusement, le procédé selon l'invention comporte un transfert de résine dans la préforme dans le but d'obtenir la pièce finale.

Avantageusement, la résine transférée dans la préforme possède une bonne tenue en température, telle qu'une résine phénolique, silicone, cyanate ester ou polyimide.

Avantageusement, le transfert de résine dans la préforme se fait au moyen d'un quelconque procédé LCM (pour Liquid Composite Moulding en anglais).

Avantageusement, le transfert de résine dans la préforme se fait au moyen d'un procédé RTM (pour Resin Transfert Moulding en anglais).

Avantageusement, le procédé comporte une phase de cuisson de la préforme imprégnée de résine.

D'autres caractéristiques et avantages de l'invention apparaîtront à l'aide de la description qui suit faite en regard des dessins annexés qui représentent :
- la figure 1 : l'illustration schématique de la déformabilité de la gaine ;
- la figure 2 : le schéma présentant les replis de la gaine sur elle-même ;
- la figure 3 : l'illustration des ligatures permettant de faciliter les replis de la gaine sur elle-même ;
- la figure 4 : une illustration des coutures pouvant assurer le maintien en forme des replis ;
- la figure 5 : l'illustration schématique de la pièce composite finale.

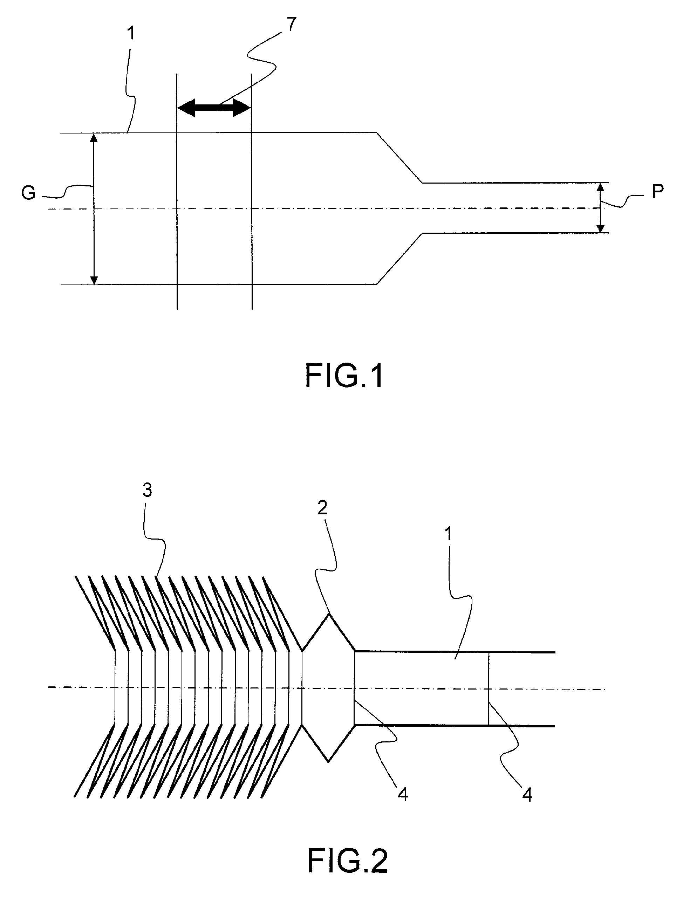

La figure 1 présente un schéma illustrant le déformabilité de la gaine 1. Cette gaine 1 peut par exemple être une gaine obtenue à partir de fibres de silice, telle que celle de la marque Dalfratex distribuée par la société Promat Lmtd. Il peut s'agir également d'une gaine tubulaire unidirectionnelle réalisée à partir de fibres de carbone, telle que celle commercialisée par la société Vombaur Gmbh, dotée d'une trame élastique transverse lui conférant sa déformabilité. Le matériau choisi pour la gaine 1 dépend en fait de l'utilisation prévue pour la pièce composite finie. Par exemple, on utilise plutôt une fibre de silice dans un milieu contenant de l'oxygène ; en revanche, dans un milieu fortement réducteur, c'est la fibre de carbone qui est privilégiée. Le matériau choisi est, de façon générale, un matériau réfractaire (verre, verre lavé ou fausse silice, basalte, silice, carbone, etc.).

Le grand diamètre G peut typiquement valoir quatre fois le petit diamètre P. L'augmentation du diamètre est alors compensée par un raccourcissement 7 de la gaine 1.

La figure 2 illustre la première étape de la mise en forme de la gaine déformable 1. De façon préférentielle, on peut placer la gaine 1 sur un outil de type mandrin axisymétrique afin de faciliter sa mise en forme. Il est en outre recommandé d'effectuer, à partir d'un ou plusieurs brins, des ligatures 4 équidistantes, autour desquelles les replis 3 sont effectués. Le repli inachevé 2 montre comment il faut déformer la gaine 1 juste en amont d'une ligature 4 pour ensuite la replier sur elle-même, autour de la ligature 4, puis venir la superposer aux replis 3 existant. Afin de réaliser l'inclinaison escomptée des replis 3, typiquement entre 15° et 75°, il est possible d'utiliser un outillage conique adéquat. La pièce composite finie, réalisée à partir de cette préforme, pouvant être utilisée dans un propulseur (à poudre, hybride ou liquide) en temps que protection thermique, l'orientation des fibres est en effet essentielle pour la performance de la pièce finale.

Par ailleurs, pour des pièces plus complexes ayant plusieurs fonctions (rallonge et col par exemple), un angle variable est souhaitable et obtenu en faisant varier le pas des replis 3 de la gaine 1 sur elle-même.

L'angle que forme les replis 3 de la préforme est obtenu par adaptation des pas de ligature.

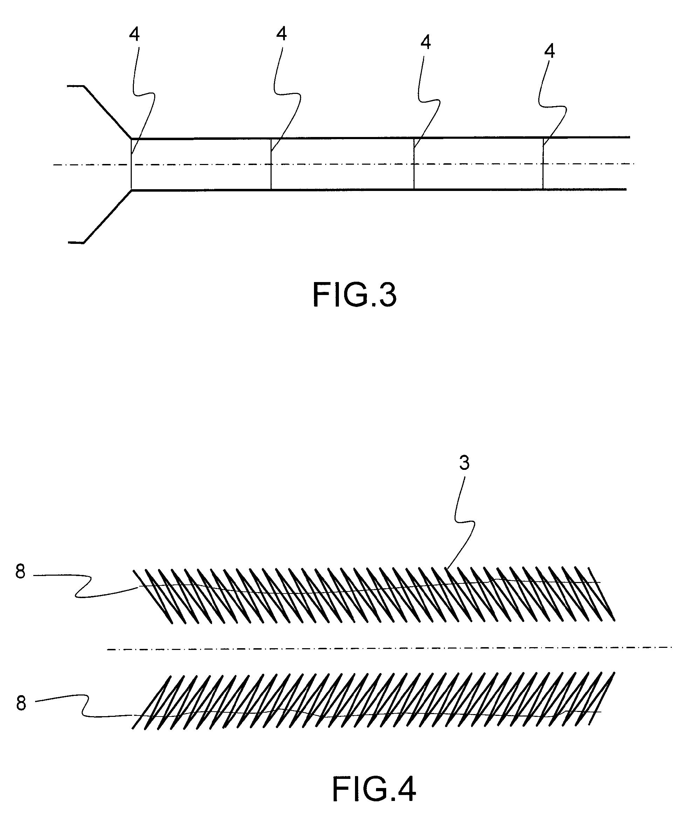

La figure 3 présente explicitement les ligatures 4 mises en place sur la gaine 1 afin de faciliter les replis 3. Ces ligatures peuvent être effectuées à partir d'autant de brins comme à partir d'un unique brin.

La figure 4 montre la deuxième étape de mise en forme de la préforme axisymétrique selon l'invention. Au cours de cette étape, les replis 3 réalisés sont maintenus en forme par deux coutures 8.

Le maintien en place des replis 3 et, plus généralement, le maintien en forme de la préforme, peut aussi être amélioré par l'utilisation de résine en quantité suffisamment faible pour ne pas altérer le caractère poreux de la préforme, nécessaire lors du transfert de résine décrit ci-dessous.

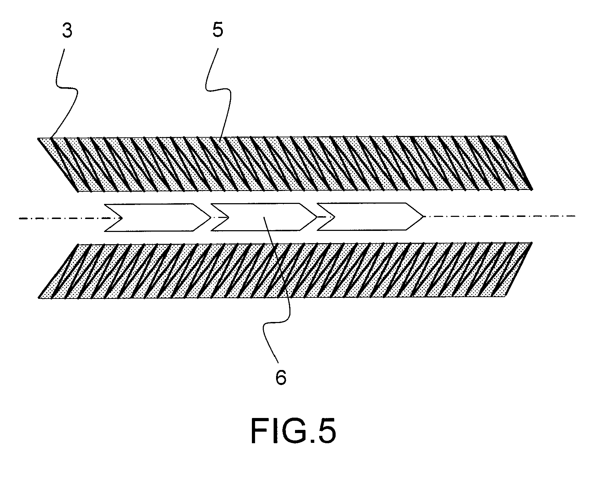

La figure 5 constitue un schéma de la pièce composite axisymétrique finie. Ainsi, une fois la mise en forme effectuée et les replis 3 mis en place, une résine 5, ayant préférentiellement une bonne tenue en température, comme une résine phénolique, silicone, cyanate ester ou polyimide, est introduite dans la préforme afin d'en lier les fibres. Le procédé utilisé pour transférer cette résine 5 dans la préforme peut être un procédé RTM (pour Resin Transfert Moulding en anglais), une infusion ou tout autre procédé LCM (pour Liquid Composite Moulding en anglais) connu. Après cuisson à l'étuve, la pièce composite finie est obtenue. L'orientation des fibres effectuée selon la description de la figure 2 favorise la résistance à l'érosion lors de l'écoulement 6 du fluide dans la pièce composite.

Les replis 3 inclinés, induisant un « effet de tuiles » par rapport à la direction de l'écoulement 6, sont essentiels pour optimiser le comportement ablatif de la pièce finale.

La porosité de la préforme ainsi obtenue est compatible du procédé de transfert de résine choisi et du taux de fibres escompté dans la pièce finale (40% à 60% en volume).

En résumé, l'invention a donc pour principal avantage de permettre la réalisation de préforme axisymétrique à partir de gaines préférentiellement non imprégnées de résine, selon un nombre restreint d'opérations simples.

## Revendications

1. Procédé de réalisation de préforme axisymétrique destinée à la réalisation de protections thermiques ablatives, dans lequel une gaine déformable (1) est mise en forme par l'intermédiaire de replis (3) de la gaine (1) sur elle-même, **caractérisé en ce qu'**il comporte la réalisation d'au moins une couture (8) reliant entre eux les replis (3) de façon à les maintenir en forme.

2. Procédé selon la revendication 1, **caractérisé en ce que** les replis (3) de la gaine (1) sur elle-même font avec ladite gaine (1) un angle fixe compris entre 15° et 75°, obtenu par une superposition de replis (3) approximativement équidistants.

3. Procédé selon la revendication 1, **caractérisé en ce que** les replis (3) de la gaine (1) sur elle-même font avec ladite gaine (1) un angle variable compris entre 15° et 75°, obtenu par une superposition de replis (3) non équidistants.

4. Procédé selon l'une quelconque des revendications précédentes, **caractérisé en ce que** ladite gaine (1) est tressée.

5. Procédé selon l'une quelconque des revendications précédentes, **caractérisé en ce que** ladite gaine (1) est non tressée.

6. Procédé selon l'une quelconque des revendications précédentes, **caractérisé en ce que** la gaine (1) est réalisée à partir de : verre, verre lavé, basalte, silice, carbone.

7. Procédé selon l'une quelconque des revendications précédentes, **caractérisé en ce qu'**il comporte un transfert de résine (5) dans la préforme dans le but d'obtenir la pièce finale.

8. Procédé selon la revendication 7, **caractérisé en ce que** la résine (5) transférée dans la préforme possède une bonne tenue en température, telle qu'une résine phénolique, silicone, cyanate ester ou polyimide.

9. Procédé selon l'une quelconque des revendications 7 à 8, **caractérisé en ce que** le transfert de résine (5) dans la préforme se fait au moyen d'un quelconque procédé LCM (pour Liquid Composite Moulding en anglais).

10. Procédé selon l'une quelconque des revendications 7 à 8, **caractérisé en ce que** le transfert de résine (5) dans la préforme se fait au moyen d'un procédé RTM (pour Resin Transfert Moulding en anglais).

11. Procédé selon l'une quelconque des revendications 7 à 10, **caractérisé en ce qu'**il comporte une phase de cuisson de la préforme imprégnée de résine (5).
